# EUROPEAN PATENT APPLICATION

(11) **EP 3 988 824 A1**
(43) Date of publication of application: **27.04.2022**
(21) Application number: 21275148.1
(22) Date of filing: 11.10.2021
(51) Int. Cl.: F16K 11/085, F16K 31/60, F16K 37/00, F16K 5/04, B01D 29/66

(54) **PLUMBING FITTING**

(30) Priority: 26.10.2020 GB 202016969
(71) Applicant: Aalberts Integrated Piping Systems Limited, Doncaster South Yorkshire DN4 8DF (GB)
(72) Inventor: WHITELEY, Paul Nicholas, Doncaster, DN24BW (GB)
(74) Representative: Wilson Gunn

(57) **Abstract**

A plumbing fitting (1) includes an outer body (2) having a first inlet aperture (7) and a first outlet aperture (9) defining therebetween a first flow path (FP1), and a second inlet aperture (11) and a second outlet aperture (13) defining therebetween a second flow path (FP2). The plumbing fitting also includes an inner body (3) disposed in the outer body. The inner body extends between the first flow path and the second flow path.

## Description

### Technical Field of the Invention

The present invention relates to a plumbing fitting, and to assemblies, systems and air conditioning units relating thereto.

In particular, but not exclusively, the present invention relates to a plumbing fitting for use with an air conditioning unit, and to an air conditioning unit comprising the plumbing fitting.

### Background to the Invention

Plumbing fittings are used for a wide range of domestic and commercial applications, e.g. to regulate fluid flow, direct fluid flow and interact with fluid flow.

Some plumbing fittings of the prior art include a mechanism which is operable to carry out a predetermined function, e.g. pressure regulation.

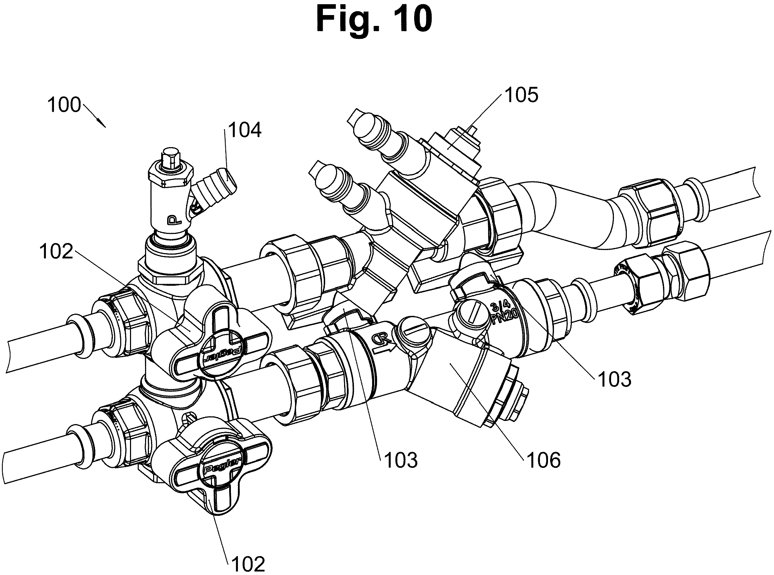

Fig. 10 illustrates a known arrangement of plumbing fittings 100 for connection to the fan coil (not shown) of an air conditioning unit (not shown), which includes an H-module 101 having two respective three-way ball valves 102, two respective isolation ball valves 103, a drain 104, a pressure independent control valve mechanism 105, and a filter 106 arranged between the isolation ball valves 103. In use, the ball valves 102, 103 can be used to flush fluid through the plumbing fitting 100 in accordance with Building Services Research and Information Association (BSRIA) guidelines.

A problem with known arrangements such as that of Fig. 10 is that they can be bulky and of a large volume, such that it can be difficult to install them in areas where space is limited; and that they can require numerous separate components to carry out a particular function, which can render them difficult to use and/or prone to damage.

For example, the arrangement of Fig. 10 not only requires a significant amount of space for installation, but also its four separate, independently controllable, ball valves require careful positioning in order that a particular fluid flow configuration can be selected (e.g. operational, isolation, flushing or draining). Due to the large number of separate, independently controllable, components, there is an increased risk of incorrectly positioning a component which can result in malfunction; and/or debris being inadvertently flushed through the mechanism.

It is an object of the present invention to provide a plumbing fitting which overcomes or ameliorates one or more of the above-mentioned or other problems.

### Summary of the Invention

According to a first aspect of the present invention there is provided a plumbing fitting comprising: an outer body having a first inlet aperture and a first outlet aperture defining therebetween a first flow path, and a second inlet aperture and a second outlet aperture defining therebetween a second flow path; and an inner body disposed in the outer body, the inner body extending between the first flow path and the second flow path.

By, 'inner body extending between the first flow path and the second flow path' it is meant that the inner body projects between, and interferes with, a line adjoining the first inlet aperture and the first outlet aperture (i.e. the first flow path); and a line adjoining the second inlet aperture and the second outlet aperture (i.e. the second flow path). This allows the inner body to be able to be designed so as to selectively open/close the first and second inlet apertures and thereby change the route of fluid flow through the plumbing fitting.

In embodiments, as the inner body extends between the first flow path and the second flow path, the plumbing fitting is more compact and therefore space efficient than arrangements of plumbing fittings of the prior art in which two separate inner valve bodies are disposed in the two flow paths, between the respective inlet apertures and outlet apertures of the H-module; and in which two separate isolation ball valves are required.

In embodiments, the plumbing fitting is less complex to use and more robust than arrangements of plumbing fittings of the prior art in which a large number of components are required to carry out a particular function.

The outer body may be a manifold. The manifold may comprise a plurality of connectors. The manifold may comprise a first inlet connector, a first outlet connector, a second inlet connector and a second outlet connector. The first inlet connector may correspond to the first inlet aperture. The first outlet connector may correspond to the first outlet aperture. The second inlet connector may correspond to the second inlet aperture. The second outlet connector may correspond to the second outlet aperture.

Each connector may be connectable to a pipe of a plumbing system. Each connector may be provided on an outside of the outer body.

Each flow path may be adapted to convey liquid through plumbing fitting. Each flow path may be adapted to operate at non-ambient pressures and/or elevated pressures.

The outer body may be substantially cylindrical.

The outer body may comprise a cavity adapted to receive the inner body. The outer body may comprise a cavity in which the inner body is received. The cavity of the outer body may be accessible through an opening provided on the outer body. The outer body may comprise at one end an opening to the cavity and at the opposite end a closed base.

The inner body may be substantially cylindrical.

The inner body may be a valve body.

The inner body may be disposed in, and rotatable along an axis relative to, the outer body. This axis is referred to herein as 'the axis of rotatable movement'.

The inner body may comprise, or be arranged to receive, a mechanism.

The mechanism may be releasably mounted in the inner body. The mechanism may be releasably mounted in the cavity provided in the inner body. The mechanism may be releasably mounted in the inner body by securing means. The securing means may comprise a screw and thread connection, twist connection or push-fit connection. Any other suitable securing means may be used, as will be known to a person skilled in the art. The mechanism may be manually, mechanically and/or electronically releasable from the receptacle.

The mechanism may be a valve, filter, measurement device or combination thereof. The mechanism may be selected from an anti-back-flow valve, commissioning valve, control valve, serviceable valve, metering valve, balancing valve, regulating valve, mixing valve, thermostatic valve, safety valve, isolation valve, dosing valve, service valve, filtration device, measuring device and combination thereof. In particular, the mechanism may be a pressure independent control valve (PICV).

The inner body may comprise a plurality of apertures (e.g. two, four, six, eight or ten apertures). The inner body may comprise a one or more inlet apertures. The inner body may comprise one or more outlet apertures. The inner body may have one or more channels (e.g. two, three, four or five channels), each channel extending between a respective pair of apertures of the inner body, e.g. an inlet aperture and an outlet aperture thereof. The or each channel may independently be operable to extend between apertures of the outer body, e.g. an inlet aperture and an outlet aperture thereof.

Each aperture of the inner body may be independently alignable with one of: the first inlet aperture of the outer body, the first outlet aperture of the outer body, the second inlet aperture of the outer body and the second outlet aperture of the outer body.

The inner body may have a first, operational, inlet aperture. The inner body may have a first, operational, outlet aperture. The inner body may have a first, operational, channel. The first, operational, channel may extend between the first, operational, inlet aperture and first, operational, outlet aperture. The first, operational, channel may avoid the mechanism.

The inner body may have a second, operational, inlet aperture. The inner body may have second, operational, outlet aperture. The inner body may have a second, operational, channel. The second, operational, channel may extend between the second, operational, inlet aperture and second, operational, outlet aperture. The second, operational, channel path may pass through the mechanism.

The first, operational, inlet aperture may be alignable with the first inlet aperture of the outer body. The first, operational, outlet aperture may be alignable with the first outlet aperture of the outer body. When the first, operational, inlet aperture is aligned with the first inlet aperture of the outer body and the first, operational, outlet aperture is aligned with the first outlet aperture of the outer body, the first flow path may extend through the first, operational, channel.

The second, operational, inlet aperture may be alignable with the second inlet aperture of the outer body. The second, operational, outlet aperture may be alignable with the second outlet aperture of the outer body. When the second, operational, inlet aperture is aligned with the second inlet aperture of the outer body and the second, operational, outlet aperture is aligned with the second outlet aperture of the outer body, the second flow path may extend through the second, operational, channel.

The inner body may have a local flushing inlet aperture. The inner body may have a local flushing outlet aperture. The inner body may have a local flushing channel. The local flushing channel may extend between the local flushing inlet aperture and the local flushing outlet aperture. The local flushing channel may avoid the mechanism.

The local flushing inlet aperture may be alignable with the first inlet aperture of the outer body. The local flushing outlet aperture may be alignable with the second outlet aperture of the outer body. When the local flushing inlet aperture is aligned with the first inlet aperture of the outer body and the local flushing outlet aperture is aligned with the second outlet aperture of the outer body, each of the first flow path and the second flow path may be obstructed. When the local flushing inlet aperture is aligned with the first inlet aperture of the outer body and the local flushing outlet aperture is aligned with the second outlet aperture of the outer body, fluid may be able to flow through the local flushing channel.

The inner body may have a forward flushing inlet aperture. The inner body may have a forward flushing outlet aperture. The inner body may have a forward flushing channel. The forward flushing channel may extend between the forward flushing inlet aperture and the forward flushing outlet aperture. The forward flushing channel may avoid the mechanism.

The forward flushing inlet aperture may be alignable with the first inlet aperture of the outer body. The forward flushing outlet aperture may be alignable with the first outlet aperture of the outer body. When the forward flushing inlet aperture is aligned with the first inlet aperture of the outer body and the forward flushing outlet aperture is aligned with the first outlet aperture of the outer body, fluid may be able to flow through the first flow path via the forward flushing channel. When the forward flushing inlet aperture is aligned with the first inlet aperture of the outer body and the forward flushing outlet aperture is aligned with the first outlet aperture of the outer body, the second flow path may be obstructed.

The inner body may have a backward flushing inlet aperture. The inner body may have a backward flushing outlet aperture. The inner body may have a backward flushing channel. The backward flushing channel may extend between the backward flushing inlet aperture and the backward flushing outlet aperture. The backward flushing channel may avoid the mechanism.

The backward flushing inlet aperture may be alignable with the second outlet aperture of the outer body. The backward flushing outlet aperture may be alignable with the second inlet aperture of the outer body. When the backward flushing inlet aperture is aligned with the second outlet aperture of the outer body and the backward flushing outlet aperture is aligned with the second inlet aperture of the outer body, fluid may be able to flow through the second flow path via the backward flushing channel. When the backward flushing inlet aperture is aligned with the second outlet aperture of the outer body and the backward flushing outlet aperture is aligned with the second inlet aperture of the outer body, the first flow path may be obstructed.

Those skilled in the art will appreciate that, depending on the position of the inner body relative to the outer body and therefore on the relative position of the apertures, the specific path of each of the first flow path and the second flow path may change. For example, the specific path of the first flow path when the first flow path passes through the first, operational, channel, is different from the specific path of the first flow path when the first flow path passes through the forward flushing channel.

The first, operational, channel; the second, operational, channel; the local flushing channel; the forward flushing channel; and the backward flushing channel may be independent of each other.

The inner body may have one or more sealing surfaces. The or each sealing surface may be provided on an outer surface of the inner body.

The inner body may be a receptacle. The inner body may be a housing arranged to releasably house the mechanism. The housing may be arranged to releasably enclose therewithin a proportion of the mechanism. The housing may be arranged to releasably enclose therewithin at least 40%, 50%, 60%, 70%, 80%, 90% or 95% of the volume of the mechanism.

The inner body may be configurable between one or more modes. The inner body may be movable (e.g. mechanically and/or electronically) between each mode. The inner body may be movable between each mode by hand. The inner body may be rotatable relative to the outer body between each mode. The inner body may be rotatable about the axis of rotatable movement of the inner body between each mode.

The plumbing fitting may comprise one or more mode indicators for indicating each mode. The or each indicator may be a marking. The or each mode indicator may be provided on the inner body.

The plumbing fitting may comprise a setting indicator for indicating the mode in which the inner body is configured. The setting indicator may be provided on the outer body.

In use, alignment between a mode indicator and the setting indicator may indicate that the inner body is configured in a respective mode.

The plumbing fitting may comprise a lock configured to releasably lock the inner body to the outer body. In this way, the lock may prevent the inner body from inadvertently ejecting from the outer body. This could occur, e.g. due to a pressure surge. The lock may comprise one or more first locking portions adapted to interlock with one or more second locking portions. The or each first locking portion may be provided on the outer body. The or each second locking portion may be provided on the inner body. Any other suitable lock may be used, as will be known to a person skilled in the art. Non-limiting examples of other locks include clips and other suitable fastening means.

According to a second aspect of the present invention, there is provided a plumbing assembly comprising the plumbing fitting of the first aspect of the present invention, optionally including any of the optional features set out herein.

The plumbing assembly may further comprise a flow measurement module. A non-limiting example of a flow measurement module is a Venturi flowmeter. The flow measurement module may be provided on the outer body.

The flow measurement module may be directly or indirectly connected to the outer body.

The flow measurement module may be provided at any one of the first inlet connector, the first outlet connector, the second inlet connector and the second outlet connector. In some embodiments, the flow measurement module is provided at the second inlet connector. The flow measurement module may be integrally formed with the outer body.

The flow measurement module may comprise one or more connectors. The flow measurement module may comprise a module inlet connector and a module outlet connector.

The module inlet connector may be directly or indirectly connected to any one of the first inlet connector, the first outlet connector, the second inlet connector and the second outlet connector. In some embodiments, the module inlet connector is directly connected to the second inlet connector.

The flow measurement module may be rotatable about an axis of the outer body. The axis may be substantially parallel to a flow axis (i.e. an axis extending in a direction of fluid flow) of any one of the first inlet connector, the first outlet connector, the second inlet connector and the second outlet connector. The axis may be substantially perpendicular to a long axis of the inner body.

The plumbing assembly may comprise an auxiliary valve. The auxiliary valve may be a ball valve. The auxiliary valve may be a multi-way ball valve. The auxiliary valve may be a two-, three-, four-, five- or six-way ball valve.

The auxiliary valve may be directly or indirectly connected to the outer body.

The auxiliary valve may be provided at one any one of the first inlet connector, the first outlet connector, the second inlet connector and the second outlet connector. In some embodiments, the auxiliary valve is provided at the first outlet connector. The auxiliary valve may be integrally formed with the outer body.

The auxiliary valve may comprise one or more connectors. The auxiliary valve may comprise a valve inlet connector. The auxiliary valve may comprise a valve outlet connector. The auxiliary valve may comprise a valve flushing port.

The valve inlet connector may be directly or indirectly connected to any one of the first inlet connector, the first outlet connector, the second inlet connector and the second outlet connector the first outlet connector. In some embodiments, the valve inlet connector is directly connected to the first outlet connector.

The auxiliary valve and the flow measurement module may be connected to a respective connector of the outer body.

The plumbing assembly may comprise a filter. The filter may be operative to remove debris from fluid without substantially affecting the rate of fluid flow. The auxiliary valve may comprise the filter. The auxiliary valve may house the filter. The filter may be integrally provided in the auxiliary valve. The filter may be arranged between the valve inlet connector and the valve outlet connector. In some embodiments, the plumbing assembly comprises an auxiliary valve having an integrated filter.

The auxiliary valve may be configurable between one or more selections. The auxiliary valve may be movable (e.g. mechanically and/or electronically) between each selection. The auxiliary valve may be movable between each selection using a handle (e.g. a wheel). The auxiliary valve may be movable between each selection by hand. The auxiliary valve may be rotatable between each selection. The rotation may be relative to the outer body. The rotation may be about an axis of the outer body. The axis may be substantially parallel to the axis of rotatable movement of the inner body. The axis may be substantially perpendicular to the first flow path and/or the second flow path.

The auxiliary valve may comprise one or more selection indicators for indicating each selection. The or each selection indicator may be a marking. The or each selection indicator may be provided on the auxiliary valve, e.g. the handle.

The auxiliary valve may comprise a choice indicator for indicating the selection in which the auxiliary valve is configured. The choice indicator may be provided on the auxiliary valve, e.g. the stalk.

The handle may be rotatable about an axis of the stalk.

In use, alignment between a selection indicator and the choice indicator may indicate that the auxiliary valve is configured in a respective selection.

The following optional features apply variously to the plumbing fitting of the first aspect of the present invention, the plumbing assembly of the second aspect of the present invention, and, unless incompatible, to either the first or the second aspect of the present invention (including optionally any optional features specified herein).

The inner body may be configurable in an operational mode in which fluid is able to flow through the first flow path through the first, operational, channel; and through the second flow path through the second, operational, channel, optionally via the mechanism.

In the operational mode fluid in the first flow path may be able to flow through the auxiliary valve and/or the filter. In the operational mode fluid in the first flow path may avoid the mechanism. In the operational mode fluid in the second flow path may be able to flow through the mechanism.

The inner body may be configurable in an isolation mode in which fluid may not be able to flow into the inner body from the first inlet aperture of the inner body, the first outlet aperture of the inner body, the second inlet aperture of the inner body and the second outlet aperture of the inner body. In the isolation mode one or more sealing surfaces of the inner body may prevent fluid from flowing into the inner body from the first inlet aperture of the inner body, the first outlet aperture of the inner body, the second inlet aperture of the inner body and the second outlet aperture of the inner body. In the isolation mode the mechanism may be releasable from the inner body.

The inner body may be configurable in a local flushing mode in which fluid is not able to flow through the first flow path and the second flow path, but is able to flow through the local flushing channel, optionally between the first inlet aperture of the inner body and the second outlet aperture of the inner body. In the local flushing mode fluid may not be able to flow into the inner body from the first outlet aperture of the inner body and the second inlet aperture of the inner body. In the local flushing mode one or more sealing surfaces of the inner body may prevent fluid from flowing into the inner body from the first outlet aperture of the inner body and the second inlet aperture of the inner body. In the local flushing mode fluid may avoid the mechanism. In the local flushing mode the mechanism may be releasable from the inner body whilst fluid is able to flow through the local flushing channel.

The inner body may be configurable in a forward flushing mode in which fluid is able to flow through the first flow path through the forward flushing channel, and is not able to flow through the second flow path. In the forward flushing mode fluid may not be able to flow into the inner body from the second inlet aperture of the inner body and the second outlet aperture of the inner body. In the forward flushing mode one or more sealing surfaces of the inner body may prevent fluid from flowing into the inner body from the second inlet aperture of the inner body and the second outlet aperture of the inner body. In the forward flushing mode fluid may avoid the mechanism. In the forward flushing mode the mechanism may be releasable from the inner body whilst fluid is able to flow through the forward flushing channel. In the forward flushing mode fluid in the first flow path may be able to flow through the auxiliary valve and/or the filter. In the forward flushing mode fluid in the first flow path may be able to flow through the valve inlet connector, and/or the filter, and/or the valve flushing port, and/or not through the valve outlet connector.

The inner body may be configurable in a backward flushing mode in which fluid is able to flow through the second flow path through the backward flushing channel, and is not able to flow through the first flow path. In the backward flushing mode fluid may not be able to flow into the inner body from the first inlet aperture of the inner body and the first outlet aperture of the inner body. In the backward flushing mode one or more sealing surfaces of the inner body may prevent fluid from flowing into the inner body from the first inlet aperture of the inner body and the first outlet aperture of the inner body. In the backward flushing mode fluid may bypass the mechanism. In the backward flushing mode the mechanism may be releasable from the inner body whilst fluid is able to flow through the backward flushing channel. In the backward flushing mode fluid may be able to flow through the auxiliary valve and/or the filter. In the backward flushing mode fluid may be able to flow through the valve outlet connector, and/or the filter, and/or the valve flushing port, and/or not through the valve inlet connector. In the backward flushing mode fluid in the second flow path may be able to flow through the flow measurement module.

The auxiliary valve may be configurable in an operational selection in which fluid is able to flow between the valve inlet connector and the valve outlet connector, optionally via the filter. In the operational selection fluid may not be able to flow through the valve flushing port.

The auxiliary valve may be configurable in a forward flushing selection in which fluid is able to flow between the valve inlet connector and the valve flushing port. In the forward flushing selection fluid may not be able to flow through the valve outlet connector and/or the filter.

The auxiliary valve may be configurable in a backward flushing selection in which fluid is able to flow between the valve outlet connector and the valve flushing port. In the backward flushing selection fluid may not be able to flow through the valve inlet connector and/or the filter.

The auxiliary valve may be configurable in a clean filter selection in which fluid is not able to flow through the valve inlet connector and the valve outlet connector, and the filter is arranged adjacent the valve flushing port so as to be removable therefrom. In this way, the filter can be easily removed for cleaning and maintenance.

In use, alignment between a selection indicator and the choice indicator may indicate that the auxiliary valve is configured in a respective selection.

The plumbing fitting may comprise one or more seals. The seals may be discrete from each other or integrally formed with each other. One, more or each seal may be independently be operable to prevent leakage of fluid between one or more of: the inner body and the outer body; and a sealing surface and an aperture. One, more or each seal may be independently operable to reduce friction between the inner body and the outer body on rotation of the inner body relative to the outer body. One, more or each seal may be substantially perpendicular to the axis of rotation. One, more or each seal may circumscribe an outer surface of the inner body.

According to a third aspect of the present invention, there is provided a plumbing system comprising a plurality of pipes connected to: one or more plumbing fittings according to the first aspect of the present invention, and/or one or more plumbing assemblies according to the second aspect of the present invention.

Non-limiting examples of plumbing systems include water supply systems (e.g. water supply systems for internal use in domestic or industrial buildings), drain-waste vent systems, sewage systems, septic systems, greywater recovery systems, treatment systems, hydronic systems, domestic heating systems and industrial heating systems.

In embodiments, the plumbing system is a heating, ventilation and air conditioning (HVAC) system, in particular an air conditioning system.

According to a fourth aspect of the present invention, there is provided an air conditioning system comprising: one or more plumbing fittings according to the first aspect of the present invention; and/or one or more plumbing assemblies according to the second aspect of the present invention (in either or each case, optionally including any optional features).

The air conditioning system may comprise a fan coil. The fan coil may be connected between the first outlet aperture and the second inlet aperture of the or each plumbing fitting. The fan coil may be connected between the first outlet aperture and the second inlet aperture of the or each plumbing assembly.

### Detailed Description of the Invention

In order that the invention may be more clearly understood one or more embodiments thereof will now be described, by way of example only, with reference to the accompanying drawings, of which:
- Figure 1: shows a perspective view of a plumbing fitting according to the present invention;
- Figure 2: shows an above view of two plumbing fittings of Fig. 1, arranged side-by-side;
- Figure 3: shows a cross sectional view of the plumbing fitting of Fig. 1, configured in an operational position;
- Figure 4: shows a cross sectional view of the plumbing fitting of Fig. 1, configured in an isolation position;

- Figure 5: shows a cross sectional view of the plumbing fitting of Fig. 1, configured in a local flushing position;
- Figure 6: shows a cross sectional view of the plumbing fitting of Fig. 1, configured in a forward flushing position;
- Figure 7: shows a cross sectional view of the plumbing fitting of Fig. 1, configured in a backward flushing position;
- Figure 8: shows a cross sectional view of the plumbing fitting of Fig. 1, configured in a cleaning filter position;
- Figure 9: shows an inner body of the plumbing fitting of Fig. 1; and
- Figure 10: shows a plumbing fitting of the prior art.

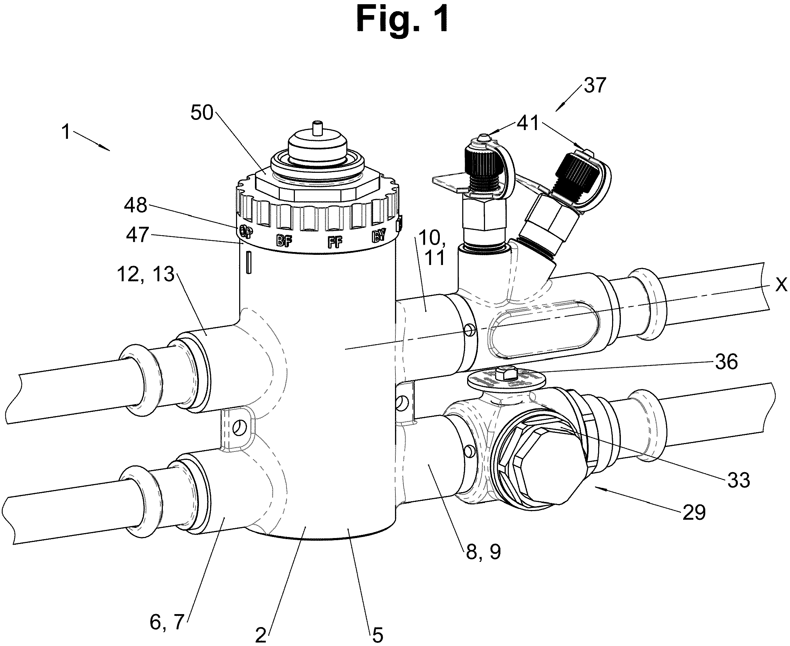

With reference to Figs. 1-9, a plumbing fitting 1 is suitable for use in a plumbing system, for example, but not limited to, an air conditioning system. In this embodiment, use of the fitting 1 forms part of a plumbing assembly, and is discussed in relation to an air conditioning system, the air conditioning system having a local side, and an external side comprising a fan coil.

The plumbing fitting comprises an outer body 2 and an inner body 3 disposed in the outer body 2. The outer body 2 is substantially cylindrical and comprises at one end an opening 4 to a cavity, in which the inner body 3 is disposed, the opening 4 defined by a circumferential rim 47, and at the opposite end a closed base 5. The inner body 3 is rotatable within, and about an axis Z relative to, the outer body 2. This axis is referred to hereinafter as the axis of rotation.

The outer body 2 comprises a first inlet connector 6 having a first inlet aperture 7; a first outlet connector 8 having a first outlet aperture 9; a first flow path FP1 extending through the outer body 2, between the first inlet aperture 7 and the first outlet aperture 9; a second inlet connector 10 having a second inlet aperture 11, a second outlet connector 12 having a second outlet aperture 13; and a second flow path FP2 extending through the outer body 2, between the second inlet aperture 11 and the second outlet aperture 13. As will become apparent to those skilled in the art, the first flow path FP1 and the second flow path FP2 may be independently obstructed or unobstructed depending on, *inter alia,* the position of the inner body 3 relative to the outer body 2. In this way, the inner body 3 acts as a valve body.

Each of the first inlet connector 6 and the second outlet connector 12 is independently connectable to a pipe of a local side of the plumbing system.

The inner body 3 comprises at one end an opening 14 to a cavity, in which a mechanism 50 is releasably disposed, the opening defined by a circumferential lip 48, and at the opposite end a closed base 15. The inner body base 14 is flush with the outer body base 5, and the inner body lip 48 is flush with the outer body rim 47.

The mechanism 50 is that of a pressure independent control valve (PICV). When the mechanism 50 is disposed in the inner body 3, the inner body 3 houses and thereby conceals a major proportion (e.g. about 80%) of the mechanism 50.

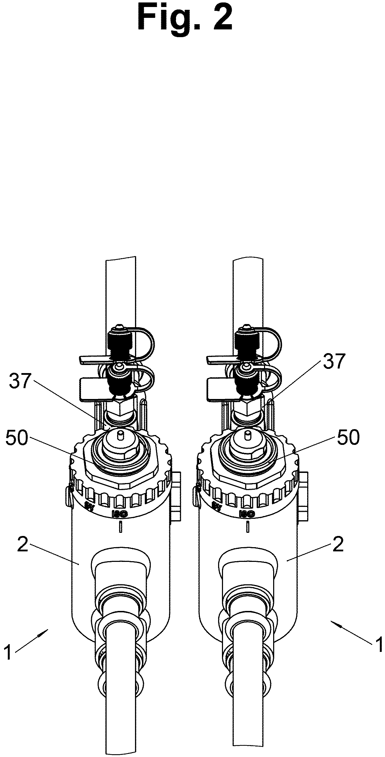

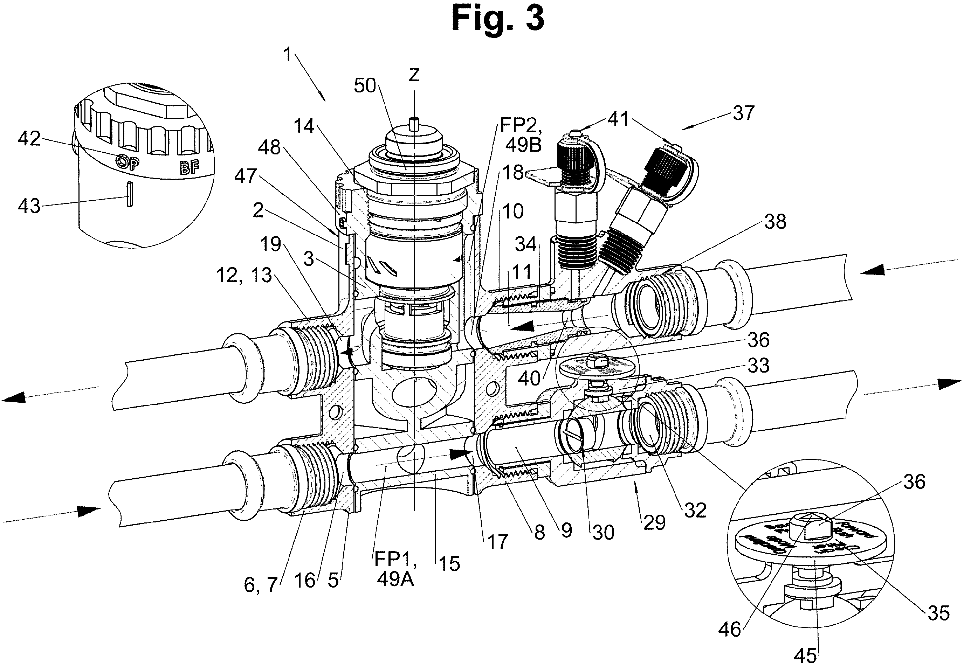

As shown in Fig. 3, the inner body 3 comprises a first, operational, inlet aperture 16, a first, operational, outlet aperture 17, a first, operational, channel 49A extending between the first, operational, inlet aperture 16 and the first, operational, outlet aperture 17, a second, operational, inlet aperture 18, a second, operational, outlet aperture 19, and a second, operational, channel 49B extending between the second, operational, inlet aperture 18 and the second, operational, outlet aperture 19. As shown in Fig. 2 and discussed in more detail in subsequent sections herein, the first, operational, channel 49A avoids the mechanism 50 (extending beneath it); and the second, operational, channel 49B passes through the mechanism 50. By rotation of the inner body 3 relative to the outer body 2, the first, operational, inlet aperture 16 is alignable with the first inlet aperture 7; the first, operational, outlet aperture 17 is alignable with the first outlet aperture 9; the second, operational, inlet aperture 18 is alignable with the second inlet aperture 11; and the second, operational, outlet aperture 19 is alignable with the second outlet aperture 13

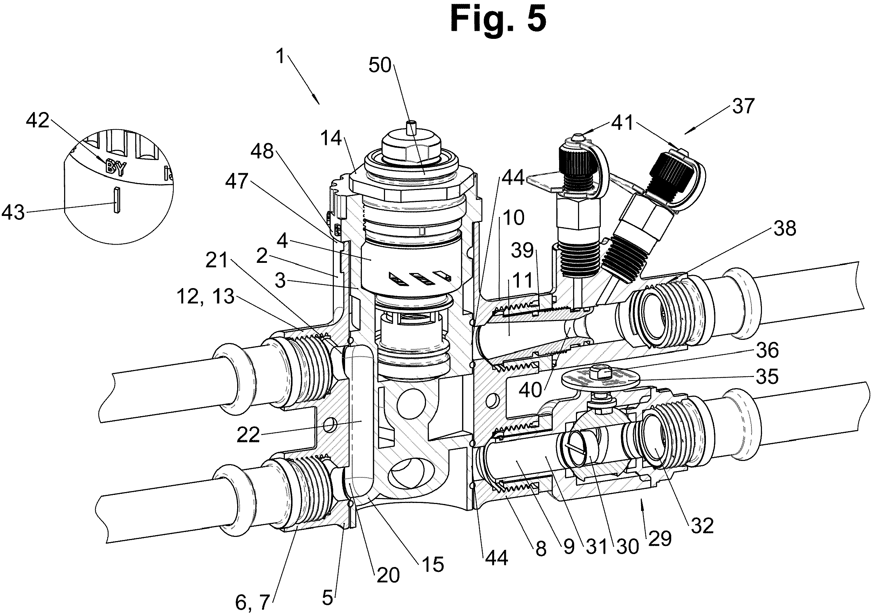

As shown in Fig. 5, the inner body 3 also comprises a local flushing inlet aperture 20, a local flushing outlet aperture 21, a local flushing channel 22 extending between the local flushing inlet aperture 20 and the local flushing outlet aperture 21 and avoiding the mechanism 50. By rotation of the inner body 3 relative to the outer body 2, The local flushing inlet aperture 20 is alignable with the first inlet aperture 7; and the local flushing outlet aperture 21 is alignable with the second outlet aperture 13. With these apertures aligned, sealing surfaces 44 of the inner body 3 block the first outlet aperture 9 and the second inlet aperture 11 of the outer body 2.

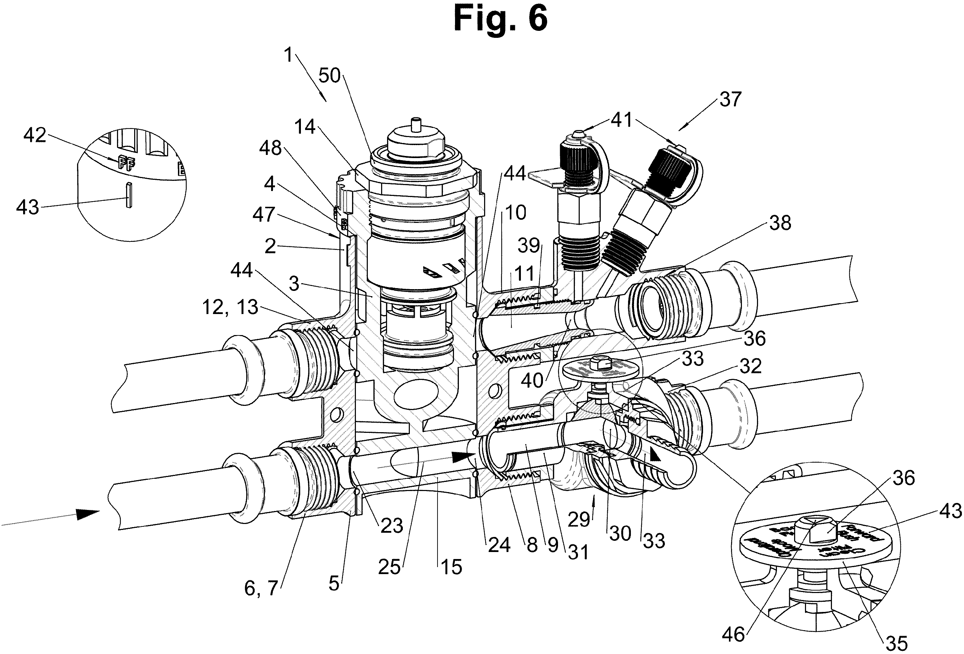

As shown in Fig. 6, the inner body 3 also comprises a forward flushing inlet aperture 23, a forward flushing outlet aperture 24, and a forward flushing channel 25 extending between the forward flushing inlet aperture 23 and the forward flushing outlet aperture 24 and avoiding the mechanism 50. By rotation of the inner body 3 relative to the outer body 2, the forward flushing inlet aperture 23 is alignable with the first inlet aperture 7; and the forward flushing outlet aperture 24 is alignable with the first outlet aperture 9. With these apertures aligned, sealing surfaces 44 of the inner body 3 block the second inlet aperture 11 and the second outlet aperture 13 of the outer body 2.

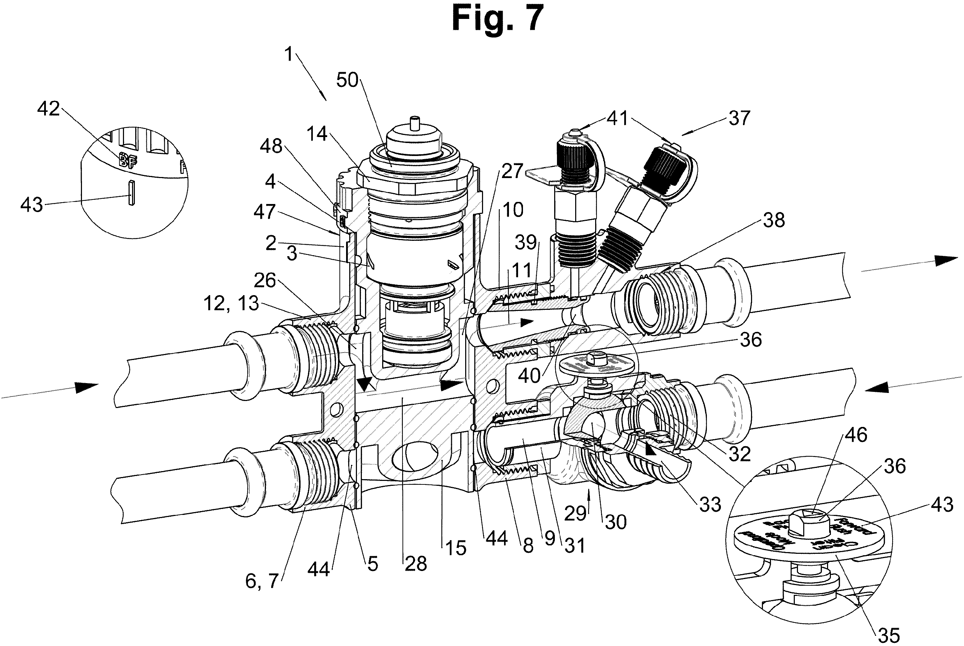

As shown in Fig. 7, the inner body 3 also comprises a backward flushing inlet aperture 26, a backward flushing outlet aperture 27, a backward flushing channel 28 extending between the backward flushing inlet aperture 26 and the backward flushing outlet aperture 27 and bypassing the mechanism 50. By rotation of the inner body 3 relative to the outer body 2, the backward flushing inlet aperture 26 is alignable with the second outlet aperture 13; and the backward flushing outlet aperture 27 is alignable with the second inlet aperture 11. With these apertures aligned, sealing surfaces 44 of the inner body 3 block the first inlet aperture 7 and the first outlet aperture 9 of the outer body 2.

The plumbing assembly 1 also comprises an auxiliary valve, in the form of a multi-way ball valve 29 having an integrated filter 30, which filter being operative to remove unwanted materials from fluid without substantially affecting the rate of fluid flow. The multi-way valve 29 comprises a valve inlet connector 31, a valve outlet connector 32 and a valve flushing port 33. The valve inlet connector 31 is directly connected to the first outlet connector 8, and the valve outlet connector 23 is connectable to a pipe, in this embodiment a pipe of an external side of a plumbing system. The valve flushing port 33 in this embodiment comprises a removable plug 34 for access to the internal contents of the valve 29, e.g. so the filter 30 can be accessed for maintenance and repair. The multi-way valve 29 also comprises a wheel handle 35 for configuring the multi-way valve 29 between various selections, and a stalk 36 disposed centrally of the wheel handle 35, as are discussed in detail hereinbelow.

The plumbing assembly 1 also comprises a venturi flowmeter 37 for measuring the rate of fluid flow therethrough. The venturi flowmeter 37 comprises a venturi inlet connector 38, a venturi outlet connector 39, a constriction 40 and measurement ports 41. The venturi flowmeter 37 shown is as disclosed in our co-pending UK patent application no. 2013570.3. Those skilled in the art will be familiar with the construction and principle of operation of venturi flowmeters generally, which could equally be used, so it is not described in further detail herein.

The venturi outlet connector 39 is directly connected to the second inlet connector 12, and the venturi inlet connector 39 is connectable to a pipe of an external side of a plumbing system.

The venturi flowmeter 37 is rotatable, relative to the outer body 2, about an axis X which is substantially perpendicular to axis Z. In this way, the venturi flowmeter 37 can be adapted to suit particular space and access requirements.

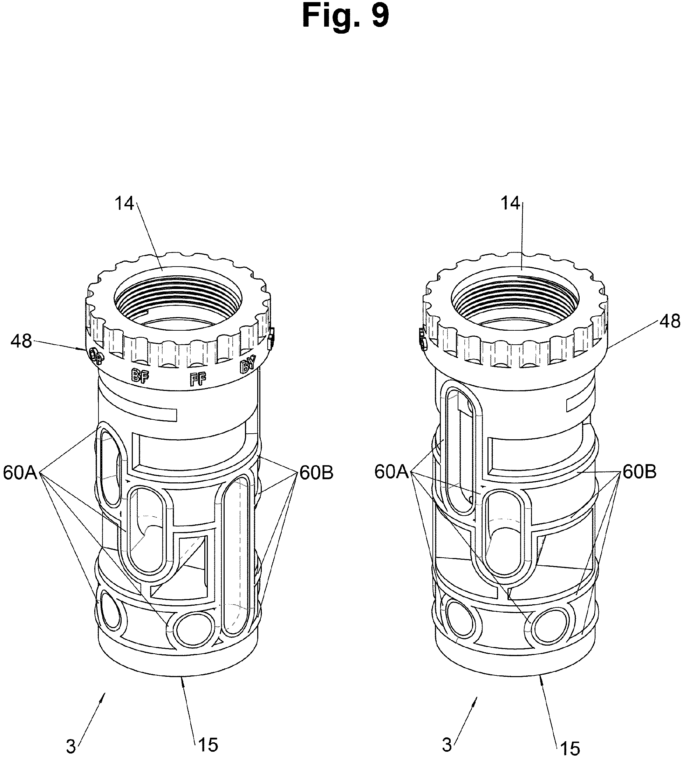

With reference to Fig. 9, the inner body is provided with a plurality of integrally formed (e.g. by injection moulding) seals 60 having: a) respective sealing ring portions 60A which are operable to prevent leakage of fluid between: the inner body 3 and the outer body 2; and a sealing surface 44 and an aperture 16, 17, 18, 19, 20, 21, 23, 24, 26, 27: and b) sealing band portions 60B which are operable to reduce friction between the inner body 3 and the outer body 2 on rotation of the inner body 3 relative to the outer body 2, wherein the sealing band portions 60B are arranged substantially perpendicular to the axis of rotation Z, and circumscribe an outer surface of the inner body 3.

The principle of operation of the plumbing fitting 1 is described in detail hereinbelow.

The inner body 3 is rotatably configurable (by hand) between an operational mode, an isolation mode, a local flushing mode, a forward flushing mode and a backward flushing mode. In order that a user can determine and select between each mode, the inner body lip 48 is provided with respective mode markers 42 for indicating each mode, and the outer body rim 47 is provided with a setting marker 43 for indicating the mode in which the inner body 3 is configured, such that, in use, alignment between a mode marker 42 and the setting marker 43 indicates that the inner body 2 is configured in a respective mode 42.

The multi-way valve 29 is rotatably configurable (by hand) between an operational selection, a forward flushing selection, a backward flushing selection and a cleaning filter selection. In order that a user can determine and select between each selection, the wheel handle 35 is provided with respective selection markers 45 for indicating each selection, and the stalk 36 is provided with a choice indicator 46 for indicating the selection in which the multi-way valve 29 is configured. In use, the wheel handle 35 is rotatable about a longitudinal axis of, and relative to, the stalk 36, such that alignment between a selection marker 45 and the choice indicator 46 indicates that the multi-way valve 29 is configured in a respective selection.

Therefore, a user can independently select between the various modes of the inner body 3 and the various modes of the multi-way valve 29. For example, a user can manually rotate the inner body 3 relative to the outer body 2 by hand (or a suitable tool) to select a particular mode, and can manually rotate the wheel handle 35 relative to the stalk 36 to select a particular selection.

As shown in Fig. 3, in the operational mode of the inner body 3 and the operational selection of the multi-way valve 29, the inner body 3 is configured at the 'OP' mode marker 42 and the multi-way valve 29 is configured at the 'operational mode' selection marker 45. Fluid is able to flow in a forward direction (from the local side to the external side) through the inner body 3 from the first, operational, inlet aperture 16, to the first, operational, channel 49A, to the first, operational, outlet aperture 17; and through the multi-way valve 29 from the first, operational, outlet aperture 17, to the valve inlet connector 31, to the filter 30, to the valve outlet connector 32, to the fan coil (not shown) of an air conditioning system, and is not able to flow through the valve flushing port 33 which is closed off by the ball valve 30. Fluid is able to flow in a forward direction (from the fan coil (not shown) on the external side, to the local side) through the venturi flowmeter 37 from the venturi inlet connector 38, to the constriction 40, to the venturi outlet connector 39; and through the inner body 3 from the second, operational, inlet aperture 18, to the second, operational, channel 49B and the mechanism 50, to the second, operational, outlet aperture 19. In this way, the filter catches any debris and thereby protects the external side of the plumbing system and mechanism 50 therefrom, and the mechanism 50 (in this example a PICV) can perform its predetermined function.

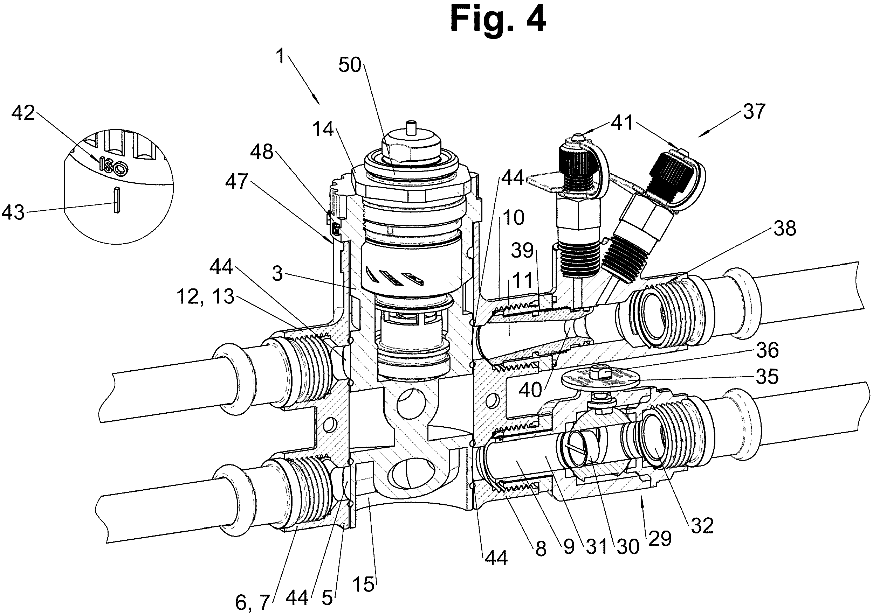

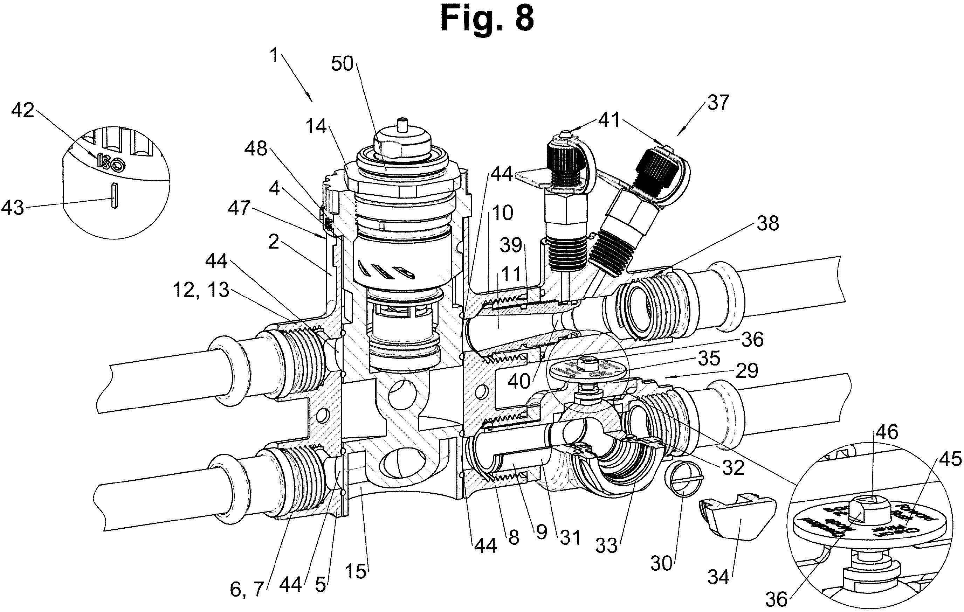

As shown in Fig. 4, in the isolation mode of the inner body 3, the inner body 3 is configured at the 'ISO' mode marker 42. Fluid is not able to flow into the inner body 3 from the first inlet aperture 7, the first outlet aperture 9, the second inlet aperture 11 and the second outlet aperture 13. That is, sealing surfaces 44 provided on the outer surface of the inner body 3 prevent (by blocking) fluid from flowing into the inner body 3 from the first inlet aperture 7, the first outlet aperture 9, the second inlet aperture 11 and the second outlet aperture 13. In the isolation mode the mechanism 50 can be released from the inner body 3. In this way, the inner body 3 and mechanism 50 can be isolated without needing to disassemble a significant part of, or the entire, plumbing fitting 1 and/or plumbing system. In addition, optionally where the inner body 3 is configured in the isolation mode, the multi-way valve may be configured at the cleaning filter selection, as shown in Fig. 8, in which the multi-way valve 29 is configured at the 'Clean filter' selection marker 45. In the cleaning filter selection of the multi-way valve 29, fluid is not able to flow into the multi-way valve 29 through the valve inlet connector 31 and the valve outlet connector 32 (it is blocked by the ball valve 29), and the filter 30 is arranged adjacent to the valve flushing port 33. In this way, the filter 30 can be removed from the multi-way valve 29 for maintenance and repair without needing to disassemble a significant part of, or the entire, plumbing fitting 1 and/or plumbing system.

As shown in Fig. 5, in the local flushing mode of the inner body 3, the inner body 3 is configured at the 'BY' mode marker 42. Fluid is able to flow into the inner body 3 from the first inlet aperture 7, to the local flushing channel 22, to the second outlet aperture 9, whilst avoiding the mechanism 50, and is not able to flow into the inner body 3 from the first outlet aperture 9 and the second inlet aperture 11. That is, sealing surfaces 44 provided on the outer surface of the inner body 3 prevent (by blocking) fluid from flowing into the inner body 3 from the first outlet aperture 9 and the second inlet aperture 11. In the local flushing mode the mechanism 50 can be released from the inner body 3 whilst fluid is able to flow through the local flushing channel 22. In the local flushing mode the venturi flowmeter and the multi-way valve 29 are not in use and fluid does not flow from the fan coil (not shown). In this way, the local side of the plumbing system can be flushed whilst protecting the external side of the plumbing system from any debris.

As shown in Fig. 6, in the forward flushing mode of the inner body 3 and the forward flushing selection of the multi-way valve 29, the inner body 3 is configured at the 'FF' mode marker 42 and the multi-way valve 29 is configured at the 'Forward Flush' selection marker 45. Fluid is able to flow into the inner body 3 from the first inlet aperture 7, to the forward flushing channel 25, to the first outlet 9 aperture; and through the multi-way valve 29 from the first outlet bore 9, to the valve inlet connector 31, to the valve flushing port 33, and not through the filter 30 and the valve outlet connector 32 (hence not to the fan coil). Fluid is not able to flow into the inner body 3 from the second inlet aperture 11 and the second outlet aperture 13. That is, sealing surfaces 44 provided on the outer surface of the inner body 3 prevent (by blocking) fluid from flowing into the inner body 3 from the second inlet aperture 11 and the second outlet aperture 13. In the forward flushing mode the mechanism 50 is releasable (if desired) from the inner body 3 whilst fluid is able to flow through the forward flushing channel 25. In this way, the first inlet aperture 7, the first outlet aperture 9 and the multi-way valve 29 can be flushed without interfering with the external side of the plumbing system, the venturi flowmeter 37 and the mechanism 50 (and without exposing any debris in the fluid thereto).

As shown in Fig. 7, in the backward flushing mode of the inner body 3 and the backward flushing selection of the multi-way valve 29, the inner body 3 is configured at the 'BF' mode marker 42 and the multi-way valve 29 is configured at the 'Back Flush' selection marker 45. Here, fluid is able to flow in a reverse direction. In particular, fluid is able to flow into the inner body 3 from the second outlet aperture 13, to the backward flushing channel 28, to the second inlet aperture 11; through the external side of the plumbing system from the second inlet aperture 11; through the multi-way valve 29 from the external side of the plumbing system, to the valve outlet connector 32, through the valve flushing port 33, and is not able to flow through the filter 30 and the valve inlet connector 31. That is, sealing surfaces 44 provided on the outer surface of the inner body 3 prevent (by blocking) fluid from flowing into the inner body 3 from the first inlet aperture 7 and the first outlet aperture 9, and the ball valve 29 is configured to block fluid from flowing therefrom towards the inner body 3. In the backward flushing mode the mechanism 50 can be released from the inner body 3 whilst fluid is able to flow through the backward flushing channel 28. In this way, fluid can be flushed through the plumbing system in the reverse direction without interfering with the mechanism 50 and the filter 30 (and without exposing them to any debris in the fluid).

The one or more embodiments are described above by way of example only. Many variations are possible without departing from the scope of protection afforded by the appended claims.

## Claims

1. A plumbing fitting comprising:
an outer body having a first inlet aperture and a first outlet aperture defining therebetween a first flow path, and a second inlet aperture and a second outlet aperture defining therebetween a second flow path; and
an inner body disposed in the outer body,
the inner body extending between the first flow path and the second flow path.

2. A plumbing fitting as claimed in claim 1 wherein the inner body comprises, or is arranged to receive, a mechanism
and, optionally,
wherein the mechanism is selected from an anti-back-flow valve, commissioning valve, control valve, serviceable valve, metering valve, balancing valve, regulating valve, mixing valve, thermostatic valve, safety valve, isolation valve, dosing valve, service valve, filtration device, measuring device and combinations thereof, or, optionally, wherein the mechanism is a pressure independent control valve.

3. A plumbing fitting as claimed in any preceding claim wherein the inner body comprises a plurality of apertures and one or more channels, each channel extending between a respective pair of apertures
and, optionally,
wherein each aperture of the inner body is independently alignable with one of: the first inlet aperture of the outer body, the first outlet aperture of the outer body, the second inlet aperture of the outer body and the second outlet aperture of the outer body.

4. A plumbing fitting as claimed in any preceding claim wherein the inner body has a first, operational, inlet aperture; a first, operational, outlet aperture; a first, operational, channel extending between the first, operational, inlet aperture and the first, operational, outlet aperture; a second, operational, inlet aperture; a second, operational, outlet aperture; and a second, operational, channel extending between the second, operational, inlet aperture and the second, operational, outlet aperture, through, where present, the mechanism,
and/or
wherein the inner body has a local flushing inlet aperture; a local flushing outlet aperture; and a local flushing channel extending between the local flushing inlet aperture and the local flushing outlet aperture and avoiding, where present, the mechanism, and/or, wherein the inner body has a forward flushing inlet aperture; a forward flushing outlet aperture; and a forward flushing channel extending between the forward flushing inlet aperture and the forward flushing outlet aperture and avoiding, where present, the mechanism.

5. A plumbing fitting as claimed in any preceding claim wherein the inner body has a backward flushing inlet aperture; a backward flushing outlet aperture; and a backward flushing channel extending between the backward flushing inlet aperture and the backward flushing outlet aperture and bypassing, where present, the mechanism
and/or
wherein the inner body is configurable between one or modes, and, optionally, wherein the inner body is rotatable relative to the outer body between each mode.

6. A plumbing fitting as claimed in claim 5 when comprising the first, operational, channel and second, operational, channel, wherein the inner body is configurable in an operational mode in which fluid is able to flow through the first flow path through the first, operational, channel; and through the second flow path through the second, operational, channel.

7. A plumbing fitting as claimed in any preceding claim wherein the inner body is configurable in an isolation mode in which fluid is not able to flow into the inner body from the first inlet aperture of the inner body, the first outlet aperture of the inner body, the second inlet aperture of the inner body and the second outlet aperture of the inner body.

8. A plumbing fitting as claimed in claims 5 to 7 when comprising local flushing channel, wherein the inner body is configurable in a local flushing mode in which fluid is not able to flow through the first flow path and the second flow path, but is able to flow through the local flushing channel.

9. A plumbing fitting as claimed in claims 5 to 8 when comprising the forward flushing channel, wherein the inner body is configurable in a forward flushing mode in which fluid is able to flow through the first flow path through the forward flushing channel, and is not able to flow through the second flow path.

10. A plumbing fitting as claimed in claims 5 to 9 when comprising the backward flushing channel, wherein the inner body is configurable in a backward flushing mode in which fluid is able to flow through the second flow path through the backward flushing channel, and is not able to flow through the first flow path.

11. A plumbing assembly comprising a plumbing fitting as claimed in any preceding claim
and, optionally,
further comprising a flow measurement module.

12. A plumbing assembly as claimed in claim 11 further comprising a multi-way valve having an integrated filter.

13. A plumbing assembly as claimed in claim 12 wherein the multi-way valve comprises a valve inlet connector, a valve outlet connector and a valve flushing port
and, optionally, wherein the multi-way valve is configurable in:
an operational selection in which fluid is able to flow between the valve inlet connector and the valve outlet connector and, where present, through the filter,
and/or, optionally,
wherein the multi-way valve is configurable in:
a forward flushing selection in which fluid is able to flow between the valve inlet connector and the valve flushing port, and not able to flow through the valve outlet connector and, where present, the filter,
and/or optionally,
wherein the multi-way valve is configurable in:
a backward flushing selection in which fluid is able to flow between the valve outlet connector and the valve flushing port, and not able to flow through the valve inlet connector and, where present, the filter
and/or optionally,
wherein the multi-way valve is configurable in:
a clean filter selection in which fluid is not able to flow through the valve inlet connector and the valve outlet connector, and the filter is arranged adjacent the valve flushing port so as to be removable therefrom.

14. A plumbing system comprising a plurality of pipes connected to: one or more plumbing fittings as claimed in any of claims 1 to 10; and/or one or more plumbing assemblies as claimed in any of claims 11 or 12, wherein the plumbing system is optionally an air conditioning system or a heating, ventilation and air conditioning system.

15. An air conditioning system comprising:
one or more plumbing fittings as claimed in any of claims 1 to 10, and/or one or more plumbing assemblies as claimed in any of claims 11 to 14; and
a fan coil,
wherein the fan coil is connected between the first outlet aperture and the second inlet aperture of the or each plumbing fitting and/or plumbing assembly.
